# EUROPEAN PATENT SPECIFICATION

(11) **EP 4 500 042 B1**
(45) Date of publication and mention of the grant of the patent: **22.04.2026**
(21) Application number: 23710389.0
(22) Date of filing: 07.03.2023
(51) Int. Cl.: F16C 32/04, F16C 39/02

(54) **A MONITORING SYSTEM AND A METHOD FOR MONITORING CONDITION OF SAFETY BEARINGS OF A MAGNETICALLY LEVITATED OBJECT**
EIN ÜBERWACHUNGSSYSTEM UND EIN VERFAHREN ZUR ÜBERWACHUNG DES ZUSTANDS VON SICHERHEITSLAGERN EINES MAGNETISCH SCHWEBENDEN OBJEKTS
UN SYSTÈME DE SURVEILLANCE ET UNE MÉTHODE POUR SURVEILLER L'ÉTAT DES PALIERS DE SÉCURITÉ D'UN OBJET EN LÉVITATION MAGNÉTIQUE

(30) Priority: 28.03.2022 FI 20225264
(43) Date of publication of application: 05.02.2025
(73) Proprietor: SpinDrive Oy, 53850 Lappeenranta (FI)
(72) Inventor: HALLIVUORI, Matti, 53850 Lappeenranta (FI); SMIRNOV, Alexander, 53850 Lappeenranta (FI)
(74) Representative: Väänänen, Janne Kalervo
(86) International application number: PCT/FI2023/050127
(87) International publication number: WO 2023/187252

(56) References cited:
- EP-A1- 3 562 001
- EP-A1- 3 702 633
- CN-A- 112 460 146
- US-A1- 2015 260 221
- US-A1- 2016 146 247

## Description

### Field of the disclosure

The disclosure relates generally to safety bearings of a magnetically levitated object that can be for example a rotor of an electrical machine. More particularly, the disclosure relates to a monitoring system, a method, and a computer program for monitoring condition of one or more safety bearings of a magnetically levitated object. Furthermore, the disclosure relates to a magnetic bearing system.

### Background

Magnetic bearing systems are commonly used for levitating rotating objects. A typical application is levitation of a rotor of an electrical machine, e.g. a high-speed electrical machine. In many cases, the levitation is accomplished by balancing attractive forces of oppositely acting magnets and other forces acting on an object to be levitated, where at least one of the magnets is a controllable electromagnet. In principle, it is also possible to balance an attractive force of one controllable electromagnet with other forces, e.g. the gravity force, acting against the attractive force of the electromagnet. There are several different kinds of magnetic bearing systems. Some systems use permanent magnet material to generate bias magnetic fluxes, while others use direct biasing currents to generate the bias magnetic fluxes. The biasing is used to linearize the operation of the system and to improve control dynamics of the system. Furthermore, the biasing based on permanent magnet material reduces energy consumption of a magnetic bearing system.

Magnetic forces acting in all or some degrees of freedom of a levitated object, e.g. a rotor of an electrical machine, need to be controlled actively because of inherent instability of the magnetic levitation. The instability is caused by the fact that a magnetic attractive force acting between a magnet and an object made of e.g. ferromagnetic material increases when an airgap between the magnet and the object gets smaller.

In case of a control failure and/or absence of energy and/or excessive external disturbance, an object levitated by a magnetic bearing system is shifted from a desired position of the object. To prevent damages of the object and/or stationary parts of the magnetic bearing system, the magnetic bearing system is typically equipped with safety bearings for carrying the object when the magnetic levitation is non-operating or when the capacity of the magnetic levitation is exceeded. At standstill, the safety bearings are utilized to rest the object after a system shut down.

The safety bearings are designed to withstand a limited number of full speed drop situations where the magnetic levitation of a rotating object stops unintentionally and consequently the rotating object falls from a magnetically levitated position onto the safety bearings. The safety bearings also can withstand a greater number of minor touches during operation. However, it is challenging to estimate what is the status of the safety bearings after the object has contacted with different severity. This may lead to early replacement of the safety bearings when their lifetime is still not fully utilized.

Publication US20160146247 describes a method for monitoring a status of safety bearings of a rotor of a machine. The method comprises catching the rotor with the safety bearings when magnetic bearings of the machine fail, switching the magnetic bearings off for monitoring the status of the safety bearings, rotating the rotor according to a pre-defined motion sequence, measuring a physical variable relating to the safety bearings with a sensor, comparing the measured physical variable or a variable derived from the measured physical variable with a target value, and generating a warning message if a deviation of the physical variable or the derived variable from the target value exceeds a threshold value. A possible inconvenience related to the method of US20160146247 is the need for the pre-defined motion sequence that should be defined so that the physical variable measured during the motion sequence is sufficiently indicative of the status of the safety bearings.

### Summary

The following presents a simplified summary to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In this document, the word "geometric" when used as a prefix means a geometric concept that is not necessarily a part of any physical object. The geometric concept can be for example a geometric point, a straight or curved geometric line, a geometric plane, a non-planar geometric surface, a geometric space, or any other geometric entity that is zero, one, two, or three dimensional.

In accordance with the invention, there is provided a new monitoring system for monitoring condition of one or more safety bearings of a magnetically levitated object that can be for example a rotor of an electrical machine.

A monitoring system according to the invention comprises sensor equipment configured to produce a sensor signal indicative of movement of the magnetically levitated object, a memory, and a data processing system configured to:
- record, to the memory, waveform samples of the sensor signal in response to drop situations in which magnetic levitation of the object stops and consequently the object falls from a magnetically levitated position onto the one or more safety bearings, and
- form a condition indicator of the safety bearings based on differences between the waveform samples recorded in response to different ones of the drop situations.

The waveform sample of the sensor signal can be recorded after each drop situation in which the object is drop down from the magnetically levitated position onto the one or more safety bearings. Each drop down provides an excitation close to an impulse with a broad-spectrum range and thus a condition or at least a change in the condition of the one or more safety bearings can be indicated by differences between the waveform samples recorded after the drop downs. A drop down is naturally happening every time when the magnetically levitated object is put on rest during a shutdown. Thus, the recordings can be carried out without any additional effort such as e.g. pre-defined motion sequences or the like.

In accordance with the invention, there is also provided a new magnetic bearing system that comprises:
- at least one magnetic bearing configured to magnetically levitate an object,
- a sensor system configured to generate a position signal indicative of a position of the object with respect to a reference position of the object,
- a controller configured to control electric current of each coil of the at least one magnetic bearing based on the position signal,
- one or more safety bearings configured to support the object in response to drop situations in which magnetic levitation of the object stops and consequently the object falls from a magnetically levitated position onto the one or more safety bearings, and
- a monitoring system according to the invention for monitoring condition of the one or more safety bearings.

In accordance with the invention, there is also provided a new method for monitoring condition of one or more safety bearings of a magnetically levitated object. The method comprises:
- producing a sensor signal indicative of movement of the magnetically levitated object,
- recording, to a memory, waveform samples of the sensor signal in response to drop situations in which magnetic levitation of the object stops and consequently the object falls from a magnetically levitated position onto the one or more safety bearings, and
- forming a condition indicator of the safety bearings based on differences between the waveform samples recorded in response to different ones of the drop situations.

In accordance with the invention, there is also provided a new computer program for monitoring condition of one or more safety bearings of a magnetically levitated object. A computer program according to the invention comprises computer executable instructions for controlling a programmable data processing system to:
- receive a sensor signal indicative of movement of the magnetically levitated object,
- record, to a memory, waveform samples of the sensor signal in response to drop situations in which magnetic levitation of the object stops and consequently the object falls from a magnetically levitated position onto the one or more safety bearings, and
- form a condition indicator of the safety bearings based on differences between the waveform samples recorded in response to different ones of the drop situations.

Exemplifying and non-limiting embodiments are described in accompanied dependent claims.

Exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of unrecited features.

The features recited in dependent claims are mutually freely combinable unless otherwise explicitly stated.

Furthermore, it is to be understood that the use of "a" or "an", i.e. a singular form, throughout this document does not exclude a plurality.

### Brief description of the figures

Exemplifying and non-limiting embodiments and their advantages are explained in greater detail below in the sense of examples and with reference to the accompanying drawings, in which:
figure 1a illustrates a magnetic bearing system according to an exemplifying and non-limiting embodiment,
figures 1b and 1c illustrate exemplifying operation of a monitoring system according to an exemplifying and non-limiting embodiment for monitoring condition of one or more safety bearings of a magnetically levitated object, and
figure 2 shows a flowchart of a method according to an exemplifying and non-limiting embodiment for monitoring condition of one or more safety bearings of a magnetically levitated object.

### Description of exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

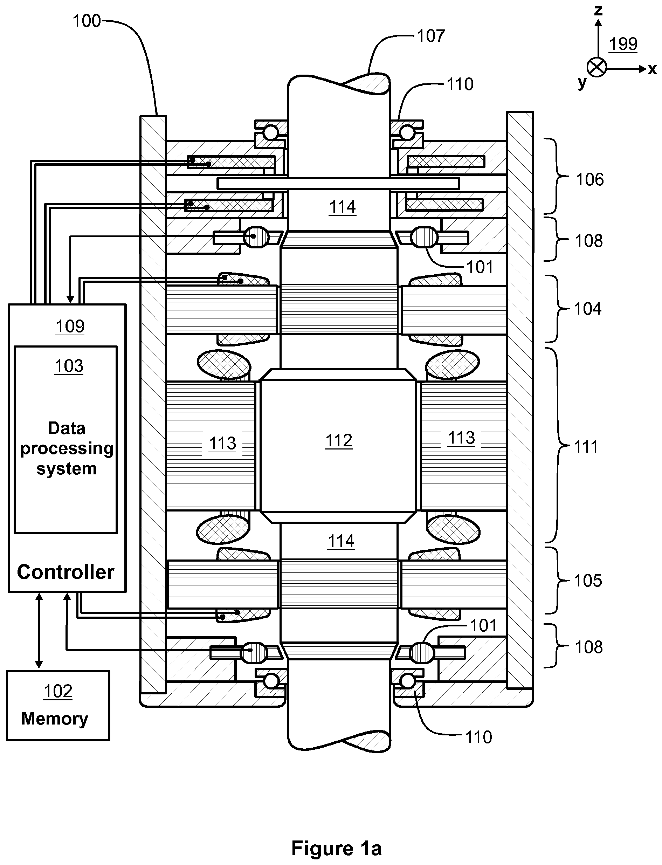

Figure 1a illustrates a magnetic bearing system according to an exemplifying and non-limiting embodiment. The magnetic bearing system comprises radial magnetic bearings 104 and 105 and an axial magnetic bearing 106 which are configured to magnetically levitate an object 107. It is also possible that a magnetic bearing system according to an exemplifying and non-limiting embodiment comprises only one magnetic bearing, e.g. an axial magnetic bearing in a case in which radial bearings are gas bearing.

In the exemplifying case illustrated in figure 1a, the magnetically levitated object 107 is a rotor of an electrical machine 100 and the magnetic bearing system is a part of the electrical machine 100. The rotor comprises an electromagnetically active part 112 and a shaft 114. The electrical machine further comprises a stator 111 that comprises a stator core 113 and stator windings. The electrical machine 100 can be for example an induction machine, a permanent magnet "PM" machine, an electrically excited synchronous machine, or a synchronous reluctance machine. In figure 1a, stationary parts of the electrical machine 100 are shown as a section view so that a geometric section plane is parallel with the xz-plane of a coordinate system 199.

The magnetic bearing system comprises a sensor system 108 configured to generate a position signal indicative of a position of the object 107 with respect to a reference position of the object. In this exemplifying case, the position signal has the following five signal components: first and second signal components indicative of x- and y-positions of the upper end of the object 107, third and fourth signal components indicative of x- and y-positions of the lower end of the object 107, and a fifth signal component indicative of a z-position i.e. an axial position of the object 107. The magnetic bearing system comprises a controller 109 that is configured to control electric current of each coil of the magnetic bearings 104-106 based on the position signal. The magnetic bearing system further comprises safety bearings 110 configured to support the object 107 in response to drop situations in which magnetic levitation of the object 107 stops and consequently the object falls from a magnetically levitated position onto the safety bearings 110.

The magnetic bearing system comprises a monitoring system according to an exemplifying and non-limiting embodiment for monitoring condition of the safety bearings110. The monitoring system comprises sensor equipment 101 configured to produce a sensor signal indicative of movement of the magnetically levitated object 107. In this exemplifying case, the sensor system 108 of the magnetic bearing system is configured to also act as the sensor equipment 101 of the monitoring system. It is also possible that the monitoring system comprises its own sensor equipment that can be for example a position sensor, e.g. an inductive position sensor, an accelerometer, a flux sensor, an acoustic sensor, or some other sensor equipment which produces a sensor signal which is directly or indirectly indicative of movement of the magnetically levitated object 107 when it hits to the safety bearings in a dropping situation.

The monitoring system comprises a memory 102 and a data processing system 103 that is configured to record to the memory 102 waveform samples of the sensor signal in response to drop situations in which the magnetic levitation of the object stops and consequently the object falls from the magnetically levitated position onto the safety bearings 110. Furthermore, the data processing system 103 is configured to form a condition indicator of the safety bearings 110 based on differences between the waveform samples recorded in response to different ones of the drop situations. Therefore, the condition of the safety bearings 110 is analyzed based on comparing the waveform samples recorded at different times. One part of the analysis can be done in the time domain to find possible anomalies between the recorded waveform samples and based on those the condition of the safety bearings 110 can be evaluated. A second part of the analysis can be done in the frequency domain where the recorded waveform samples are processed by the Fourier transform, such as the fast Fourier transform "FFT", to get their frequency spectra.

In the exemplifying monitoring system illustrated in figure 1a, the controller 109 of the magnetic bearing system is configured to also act as the data processing system 103 of the monitoring system. To have a good resolution of the recorded waveform samples, the recordings are advantageously made directly from one or more analog-to-digital converters "ADC" of the sensor system 108 with a maximum sampling rate, omitting any possible software filtering. The ADCs are not shown in figure 1a. The recording with the maximum sampling rate is facilitated by that a temporal duration of each waveform sample can be short. Furthermore, the short temporal durations of the waveform samples reduce memory needs. After a drop down, there is no need to ensure the stability of the magnetic bearing system, and thus services other than recoding data to the memory 102 can be removed from the workload of the controller 109. The data can be routed directly from an ADC to a dedicated memory area through a direct memory access "DMA". Therefore, in a magnetic bearing system according to an exemplifying and non-limiting embodiment, the controller 109 is configured to deactivate the control of the magnetic bearings 104-106 in response to each drop situation to release capacity of the controller 109 to act as the data processing system of the monitoring system.

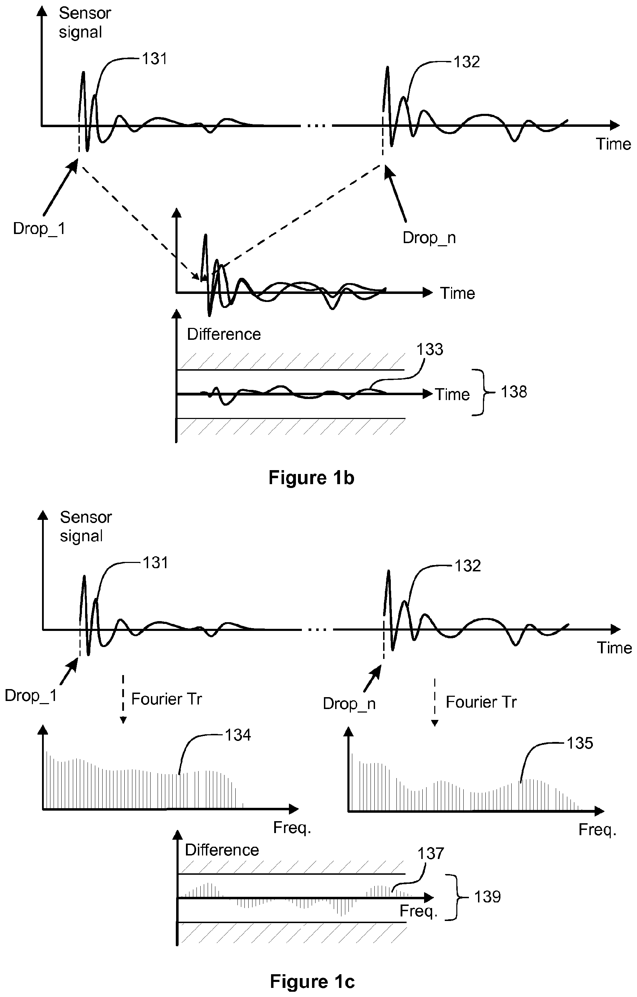

Figure 1b illustrates an exemplifying time domain analysis of first and second waveform samples 131 and 132 which have been recorded after drop situations Drop_1 and Drop_n. The waveform samples 131 and 132 may represent for example the x-position of the upper end of the object 107 or some other signal component indicative of the position of the object 107 in one degree of freedom. In this exemplifying case, the data processing system 103 is configured to compute a difference waveform 133 that is a difference between the first and second waveform samples so that starting points of the first and second waveform samples are aligned to each other. The data processing system 103 is configured to form the condition indicator of the safety bearings 110 based on the computed difference waveform. For example, the data processing system 103 can be configured to set the condition indicator to express a worn state of the safety bearings 110, i.e. the lifetime of the safety bearings 110 has ended, in response to a situation in which the computed difference waveform 133 is outside a predetermined tolerance area 138. In the exemplifying situation shown in figure 1b, the difference waveform 133 is within the tolerance area 138 and thus the safety bearings 110 have still lifetime.

In a monitoring system according to an exemplifying and non-limiting embodiment, the data processing system 103 is configured to compute a time domain trend variable that is indicative of increase of power of the difference waveform when i) a new drop situation takes place, ii) the first waveform sample 131 is kept unchanged in the computation of the difference waveform, and iii) the second waveform sample 132 is changed to be a new waveform sample recorded after the new drop situation. The time domain trend variable indicates how the difference between the most recent waveform sample and the first waveform sample 131 develops over time. Therefore, the time domain trend variable is indicative of development of a status of the safety bearings 110 over time.

Figure 1c illustrates an exemplifying frequency domain analysis of the above-mentioned first and second waveform samples 131 and 132. In this exemplifying case, the data processing system 103 is configured to compute frequency spectra 134 and 135 of first and second waveform samples 131 and 132 and compute a difference spectrum 137 that is a difference between the computed frequency spectra. The data processing system 103 is configured to form the condition indicator of the safety bearings 110 based on the computed difference spectrum 137. For example, the data processing system 103 can be configured to set the condition indicator to express a worn state of the safety bearings 110, i.e. the lifetime of the safety bearings 110 has ended, in response to a situation in which the computed difference spectrum 137 is outside a predetermined tolerance area 139. In the exemplifying situation shown in figure 1c, the difference spectrum 137 is within the tolerance area 139 and thus the safety bearings 110 have still lifetime.

In a monitoring system according to an exemplifying and non-limiting embodiment, the data processing system 103 is configured to compute a frequency domain trend variable that is indicative of increase of power of the difference spectrum when i) a new drop situation takes place, ii) the first waveform sample 131 is kept unchanged in the computation of the difference spectrum, and iii) the second waveform sample 132 is changed to be a new waveform sample recorded after the new drop situation. The frequency domain trend variable indicates how the difference between the spectrum of the most recent waveform sample and the spectrum of the first waveform sample 131 develops over time. Therefore, the frequency domain trend variable is indicative of development of the status of the safety bearings over time.

The controller 109 shown in figure 1a can be implemented with one or more processor circuits, each of which can be a programmable processor circuit provided with appropriate software, a dedicated hardware processor such as for example an application specific integrated circuit "ASIC", or a configurable hardware processor such as for example a field programmable gate array "FPGA". Furthermore, the controller 109 may comprise one or more memory devices such as e.g. random-access memory "RAM" devices. The memory 102 shown in figure 1a can be implemented with one or more memory devices such as e.g. RAM devices.

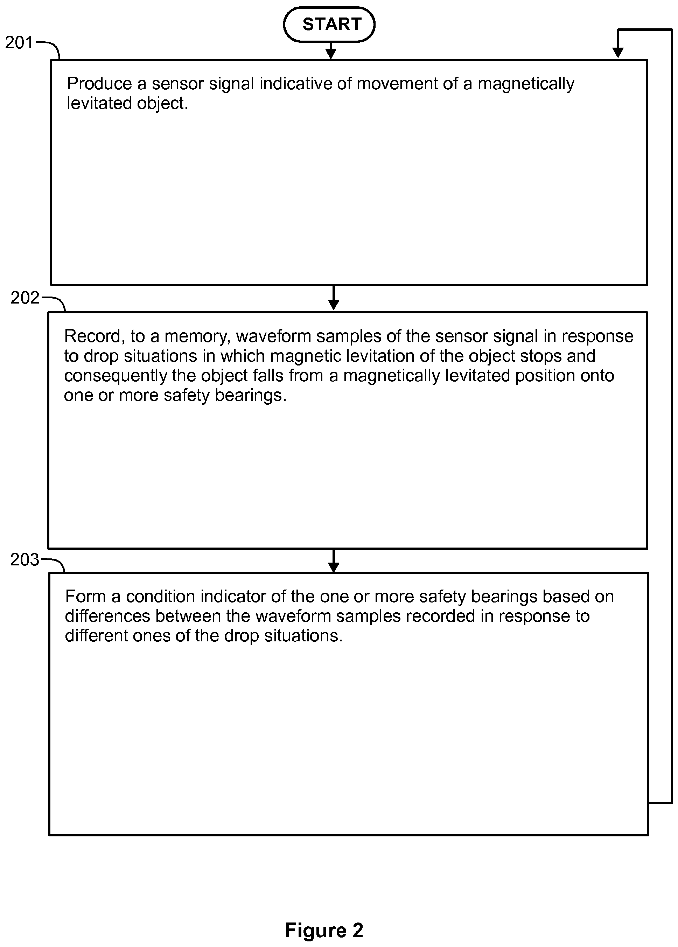

Figure 2 shows a flowchart of a method according to an exemplifying and non-limiting embodiment for monitoring condition of one or more safety bearings of a magnetically levitated object. The method comprises the following actions:
- action 201: producing a sensor signal indicative of movement of the magnetically levitated object,
- action 202: recording, to a memory, waveform samples of the sensor signal in response to drop situations in which magnetic levitation of the object stops and consequently the object falls from a magnetically levitated position onto the one or more safety bearings, and
- action 203: forming a condition indicator of the one or more safety bearings based on differences between the waveform samples recorded in response to different ones of the drop situations.

A method according to an exemplifying and non-limiting embodiment (not claimed) comprises:
- computing a difference waveform being a difference between first and second ones of the waveform samples relating to different ones of the drop situations so that starting points of the first and second waveform samples are aligned to each other, and
- forming the condition indicator of the one or more safety bearings based on the computed difference waveform.

A method according to an exemplifying and non-limiting embodiment (not claimed) comprises setting the condition indicator to express a worn state of the one or more safety bearings in response to a situation in which the computed difference waveform is outside a predetermined tolerance area.

A method according to an exemplifying and non-limiting embodiment (not claimed) comprises computing a time domain trend variable indicative of increase of power of the difference waveform when i) a new drop situation takes place, ii) the first one of the waveform samples is kept unchanged in the computation of the difference waveform, and iii) the second one of the waveform samples is changed to be a new waveform sample relating to the new drop situation. The time domain trend variable is indicative of development of the status of the one or more safety bearings over time.

A method according to an exemplifying and non-limiting embodiment (not claimed) comprises:
- compute frequency spectra of first and second ones of the waveform samples relating to different ones of the drop situations,
- computing a difference spectrum being a difference between the computed frequency spectra, and
- forming the condition indicator of the one or more safety bearings based on the difference spectrum.

A method according to an exemplifying and non-limiting embodiment (not claimed) comprises setting the condition indicator to express a worn state of the one or more safety bearings in response to a situation in which the difference spectrum is outside a predetermined tolerance area.

A method according to an exemplifying and non-limiting embodiment (not claimed) comprises computing a frequency domain trend variable indicative of increase of power of the difference spectrum when i) a new drop situation takes place, ii) the first one of the waveform samples is kept unchanged in the computation of the difference spectrum, and iii) the second one of the waveform samples is changed to be a new waveform sample relating to the new drop situation. The frequency domain trend variable is indicative of development of the status of the one or more safety bearings over time.

A computer program according to an exemplifying and non-limiting embodiment (not claimed) comprises computer executable instructions for controlling a programmable data processing system to carry out actions related to a method according to any of the above-described exemplifying and non-limiting embodiments.

A computer program according to an exemplifying and non-limiting embodiment comprises software modules for monitoring condition of one or more safety bearings of a magnetically levitated object. The software modules comprise computer executable instructions for controlling a programmable data processing system to:
- receive a sensor signal indicative of movement of the magnetically levitated object,
- record, to a memory, waveform samples of the sensor signal in response to drop situations in which magnetic levitation of the object stops and consequently the object falls from a magnetically levitated position onto the one or more safety bearings, and
- form a condition indicator of the one or more safety bearings based on differences between the waveform samples recorded in response to different ones of the drop situations.

The software modules can be for example subroutines or functions implemented with programming tools suitable for the programmable data processing system.

A computer program product according to an exemplifying and non-limiting embodiment comprises a computer readable medium, e.g. a compact disc "CD", encoded with a computer program according to an exemplifying embodiment of invention.

A signal according to an exemplifying and non-limiting embodiment is encoded to carry information defining a computer program according to an exemplifying embodiment of invention.

The specific examples provided in the description given above should not be construed as limiting the scope and/or the applicability of the appended claims. Lists and groups of examples provided in the description given above are not exhaustive unless otherwise explicitly stated. The invention is defined by appended claims.

## Claims

1. A monitoring system for monitoring condition of one or more safety bearings of a magnetically levitated object, the monitoring system comprising sensor equipment (101) configured to produce a sensor signal indicative of movement of the magnetically levitated object, **characterized in that** the monitoring system comprises a memory (102) and a data processing system (103) configured to:
- record, to the memory, waveform samples (131, 132) of the sensor signal in response to drop situations in which magnetic levitation of the object stops and consequently the object falls from a magnetically levitated position onto the one or more safety bearings, the drop situations providing excitation for movement of the object supported by the one or more safety bearings after the drop situations, and the waveform samples being indicative of the movement excited by the drop situations, and
- form a condition indicator of the one or more safety bearings based on differences between the waveform samples recorded in response to different ones of the drop situations.

2. A monitoring system according to claim 1, wherein the data processing system is configured to:
- compute a difference waveform (133) being a difference between first and second ones of the waveform samples (131, 132) relating to different ones of the drop situations so that starting points of the first and second waveform samples are aligned to each other, and
- form the condition indicator of the one or more safety bearings based on the computed difference waveform.

3. A monitoring system according to claim 2, wherein the data processing system is configured to set the condition indicator to express a worn state of the one or more safety bearings in response to a situation in which the computed difference waveform (133) is outside a predetermined tolerance area (138).

4. A monitoring system according to claim 2 or 3, wherein the data processing system is configured to compute a time domain trend variable indicative of increase of power of the difference waveform when i) a new drop situation takes place, ii) the first one of the waveform samples is kept unchanged in computation of the difference waveform, and iii) the second one of the waveform samples is changed to be the waveform sample relating to the new drop situation, the time domain trend variable being indicative of development of a status of the one or more safety bearings over time.

5. A monitoring system according to any one of claims 1-4, wherein the data processing system is configured to:
- compute frequency spectra (134, 135) of first and second ones of the waveform samples (131, 132) relating to different ones of the drop situations,
- compute a difference spectrum (137) being a difference between the computed frequency spectra, and
- form the condition indicator of the one or more safety bearings based on the difference spectrum.

6. A monitoring system according to claim 5, wherein the data processing system is configured to set the condition indicator to express a worn state of the one or more safety bearings in response to a situation in which the difference spectrum is outside a predetermined tolerance area (139).

7. A monitoring system according to claim 5 or 6, wherein the data processing system is configured to compute a frequency domain trend variable indicative of increase of power of the difference spectrum when i) a new drop situation takes place, ii) the first one of the waveform samples is kept unchanged in computation of the difference spectrum, and iii) the second one of the waveform samples is changed to be the waveform sample relating to the new drop situation, the frequency domain trend variable being indicative of development of a status of the one or more safety bearings over time.

8. A magnetic bearing system comprising:
- at least one magnetic bearing (104-106) configured to magnetically levitate an object (107),
- a sensor system (108) configured to generate a position signal indicative of a position of the object with respect to a reference position of the object,
- a controller (109) configured to control electric current of each coil of the at least one magnetic bearing based on the position signal, and
- one or more safety bearings (110) configured to support the object in response to drop situations in which magnetic levitation of the object stops and consequently the object falls from a magnetically levitated position onto the one or more safety bearings,
**characterized in that** the magnetic bearing system comprises a monitoring system according to any one of claims 1-7 for monitoring condition of the one or more safety bearings.

9. A magnetic bearing system according to claim 8, wherein the sensor system (108) is configured to act as the sensor equipment (101) of the monitoring system, and the position signal comprises the sensor signal used by the monitoring system.

10. A magnetic bearing system according to claim 8 or 9, wherein the controller (109) is configured to act as the data processing system (103) of the monitoring system.

11. A magnetic bearing system according to claim 10, wherein the controller is configured to deactivate the control of the electric current of each coil of the at least one magnetic bearing in response to each of the drop situations to release capacity of the controller to act as the data processing system of the monitoring system.

12. A method for monitoring condition of one or more safety bearings of a magnetically levitated object, the method comprising:
- producing (201) a sensor signal indicative of movement of the magnetically levitated object,
**characterized in that** the method comprises:
- recording (202), to a memory, waveform samples of the sensor signal in response to drop situations in which magnetic levitation of the object stops and consequently the object falls from a magnetically levitated position onto the one or more safety bearings, the drop situations providing excitation for movement of the object supported by the one or more safety bearings after the drop situations, and the waveform samples being indicative of the movement excited by the drop situations, and
- forming (203) a condition indicator of the one or more safety bearings based on differences between the waveform samples recorded in response to different ones of the drop situations.

13. A computer program for monitoring condition of one or more safety bearings of a magnetically levitated object, the computer program comprising computer executable instructions for controlling a programmable data processing system to:
- receive a sensor signal indicative of movement of the magnetically levitated object,
**characterized in that** the computer program comprises computer executable instructions for controlling the programmable data processing system to:
- record, to a memory, waveform samples of the sensor signal in response to drop situations in which magnetic levitation of the object stops and consequently the object falls from a magnetically levitated position onto the one or more safety bearings, the drop situations providing excitation for movement of the object supported by the one or more safety bearings after the drop situations, and the waveform samples being indicative of the movement excited by the drop situations, and
- form a condition indicator of the one or more safety bearings based on differences between the waveform samples recorded in response to different ones of the drop situations.

14. A non-volatile computer readable medium encoded with a computer program according to claim 13.

## Patentansprüche

1. Überwachungssystem zum Überwachen des Zustands des einen oder mehrerer Fanglager eines magnetisch schwebenden Objekts, wobei das Überwachungssystem eine Sensorausrüstung (101) umfasst, die so konfiguriert ist, dass sie ein Sensorsignal erzeugt, das die Bewegung des magnetisch schwebenden Objekts angibt, **dadurch gekennzeichnet, dass** das Überwachungssystem einen Speicher (102) und ein Datenverarbeitungssystem (103) umfasst, das konfiguriert ist zum:
- Aufzeichnen, in den Speicher, von Wellenformabtastwerten (131, 132) des Sensorsignals als Reaktion auf Abfallsituationen, in denen das magnetische Schweben des Objekts stoppt und das Objekt folglich aus einer magnetisch schwebenden Position auf das eine oder mehrere Fanglager fällt, wobei die Abfallsituationen eine Anregung für eine Bewegung des Objekts, das von dem einen oder mehreren Fanglagern nach den Abfallsituationen gestützt wird, bereitstellen, und die Wellenformabtastwerte die Bewegung, die durch die Abfallsituationen angeregt wird, angeben, und
- Ausbilden eines Zustandsindikators des einen oder mehrerer Fanglager anhand der Differenzen zwischen den Wellenformabtastwerten, die als Reaktion auf verschiedene Abfallsituationen aufgezeichnet wurden.

2. Überwachungssystem nach Anspruch 1, wobei das Datenverarbeitungssystem konfiguriert ist zum:
- Berechnen einer Differenzwellenform (133), die eine Differenz zwischen ersten und zweiten der Wellenformabtastwerte (131, 132) ist, die sich auf verschiedene der Abfallsituationen beziehen, sodass die Startpunkte der ersten und zweiten Wellenformabtastwerte aufeinander ausgerichtet sind, und
- Ausbilden des Zustandsindikators des einen oder mehrerer Fanglager anhand der berechneten Differenzwellenform.

3. Überwachungssystem nach Anspruch 2, wobei das Datenverarbeitungssystem so konfiguriert ist, dass es den Zustandsindikator so einstellt, dass er einen Verschleißzustand des einen oder mehrerer Fanglager als Reaktion auf eine Situation ausdrückt, in der die berechnete Differenzwellenform (133) außerhalb eines vorbestimmten Toleranzbereichs (138) liegt.

4. Überwachungssystem nach Anspruch 2 oder 3, wobei das Datenverarbeitungssystem so konfiguriert ist, dass es eine Zeitbereich-Trendvariable berechnet, die eine Leistungszunahme der Differenzwellenform angibt, wenn i) eine neue Abfallsituation eintritt, ii) der erste der Wellenformabtastwerte bei der Berechnung der Differenzwellenform unverändert beibehalten wird und iii) der zweite der Wellenformabtastwerte so geändert wird, dass er der Wellenformabtastwert ist, der sich auf die neue Abfallsituation bezieht, wobei die Zeitbereich-Trendvariable die Entwicklung eines Status des einen oder mehrerer Fanglager Im Laufe der Zeit angibt.

5. Überwachungssystem nach einem der Ansprüche 1-4, wobei das Datenverarbeitungssystem konfiguriert ist zum:
- Berechnen der Frequenzspektren (134, 135) von ersten und zweiten der Wellenformabtastwerte (131, 132), die sich auf verschiedene Abfallsituationen beziehen,
- Berechnen eines Differenzspektrums (137), das eine Differenz zwischen den berechneten Frequenzspektren darstellt, und
- Ausbilden des Zustandsindikators des einen oder mehrerer Fanglager anhand des Differenzspektrums.

6. Überwachungssystem nach Anspruch 5, wobei das Datenverarbeitungssystem so konfiguriert ist, dass es den Zustandsindikator so einstellt, dass er einen Verschleißzustand des einen oder mehrerer Fanglager als Reaktion auf eine Situation ausdrückt, in der das Differenzspektrum außerhalb eines vorbestimmten Toleranzbereichs (139) liegt.

7. Überwachungssystem nach Anspruch 5 oder 6, wobei das Datenverarbeitungssystem so konfiguriert ist, dass es eine Frequenzbereich-Trendvariable berechnet, die eine Leistungszunahme des Differenzspektrums angibt, wenn i) eine neue Abfallsituation eintritt, ii) der erste der Wellenformabtastwerte bei der Berechnung des Differenzspektrums unverändert beibehalten wird, und iii) der zweite der Wellenformabtastwerte so geändert wird, dass er der Wellenformabtastwert ist, der sich auf die neue Abfallsituation bezieht, wobei die Frequenzbereich-Trendvariable die Entwicklung eines Status des einen oder mehrerer Fanglager Im Laufe der Zeit angibt.

8. Magnetlagersystem, umfassend:
- mindestens ein Magnetlager (104-106), das so konfiguriert ist, dass es ein Objekt (107) magnetisch schweben lässt,
- ein Sensorsystem (108), das so konfiguriert ist, dass es ein Positionssignal erzeugt, das eine Position des Objekts in Bezug auf eine Referenzposition des Objekts angibt,
- eine Steuerung (109), die so konfiguriert ist, dass sie den elektrischen Strom jeder Spule des mindestens einen Magnetlagers anhand des Positionssignals steuert, und
- ein oder mehrere Fanglager (110), die so konfiguriert sind, dass sie das Objekt als Reaktion auf Abfallsituationen unterstützen, in denen das magnetische Schweben des Objekts stoppt und das Objekt folglich aus einer magnetisch schwebenden Position auf das eine oder mehrere Fanglager fällt,
**dadurch gekennzeichnet, dass** das Magnetlagersystem ein Überwachungssystem nach einem der Ansprüche 1-7 zum Überwachen des Zustands des einen oder mehrerer Fanglager umfasst.

9. Magnetlagersystem nach Anspruch 8, wobei das Sensorsystem (108) so konfiguriert ist, dass es als die Sensorausrüstung (101) des Überwachungssystems fungiert, und das Positionssignal das Sensorsignal umfasst, das von dem Überwachungssystem verwendet wird.

10. Magnetlagersystem nach Anspruch 8 oder 9, wobei die Steuerung (109) so konfiguriert ist, dass sie als das Datenverarbeitungssystem (103) des Überwachungssystems fungiert.

11. Magnetlagersystem nach Anspruch 10, wobei die Steuerung so konfiguriert ist, dass sie die Steuereinheit des elektrischen Stroms jeder Spule des mindestens einen Magnetlagers als Reaktion auf jede der Abfallsituationen deaktiviert, um die Kapazität der Steuerung freizugeben, um als Datenverarbeitungssystem des Überwachungssystems zu fungieren.

12. Verfahren zum Überwachen des Zustands des einen oder mehrerer Fanglager eines magnetisch schwebenden Objekts, wobei das Verfahren Folgendes umfasst:
- Erzeugen (201) eines Sensorsignals, das die Bewegung des magnetisch schwebenden Objekts angibt,
**dadurch gekennzeichnet, dass** das Verfahren Folgendes umfasst:
- Aufzeichnen (202), in einen Speicher, von Wellenformabtastwerten des Sensorsignals als Reaktion auf Abfallsituationen, in denen das magnetische Schweben des Objekts stoppt und das Objekt folglich aus einer magnetisch schwebenden Position auf das eine oder mehrere Fanglager fällt, wobei die Abfallsituationen eine Anregung für eine Bewegung des Objekts, das von dem einen oder mehreren Fanglagern nach den Abfallsituationen gestützt wird, bereitstellen, und die Wellenformabtastwerte die Bewegung, die durch die Abfallsituationen angeregt wird, angeben, und
- Ausbilden (203) eines Zustandsindikators des einen oder mehrerer Fanglager anhand der Differenzen zwischen den Wellenformabtastwerten, die als Reaktion auf verschiedene Abfallsituationen aufgezeichnet wurden.

13. Computerprogramm zum Überwachen des Zustands des einen oder mehrerer Fanglager eines magnetisch schwebenden Objekts, wobei das Computerprogramm computerausführbare Anweisungen zum Steuern eines programmierbaren Datenverarbeitungssystems umfasst zum:
- Empfangen eines Sensorsignals, das die Bewegung des magnetisch schwebenden Objekts angibt,
**dadurch gekennzeichnet, dass** das Computerprogramm computerausführbare Anweisungen zum Steuern des programmierbaren Datenverarbeitungssystems umfasst zum:
- Aufzeichnen, in einen Speicher, von Wellenformabtastwerten des Sensorsignals als Reaktion auf Abfallsituationen, in denen das magnetische Schweben des Objekts stoppt und das Objekt folglich aus einer magnetisch schwebenden Position auf das eine oder mehrere Fanglager fällt, wobei die Abfallsituationen eine Anregung für eine Bewegung des Objekts, das von dem einen oder mehreren Fanglagern nach den Abfallsituationen gestützt wird, bereitstellen, und die Wellenformabtastwerte die Bewegung, die durch die Abfallsituationen angeregt wird, angeben, und
- Ausbilden eines Zustandsindikators des einen oder mehrerer Fanglager anhand der Differenzen zwischen den Wellenformabtastwerten, die als Reaktion auf verschiedene Abfallsituationen aufgezeichnet wurden.

14. Nicht-flüchtiges computerlesbares Medium, das mit einem Computerprogramm nach Anspruch 13 kodiert ist.

## Revendications

1. Système de surveillance de la condition d'un ou plusieurs paliers de sécurité d'un objet en lévitation magnétique, le système de surveillance comprenant un équipement de capteur (101) configuré pour produire un signal de capteur indicatif du mouvement de l'objet en lévitation magnétique, **caractérisé en ce que** le système de surveillance comprend une mémoire (102) et un système de traitement de données (103) configurés pour :
- enregistrer dans la mémoire des échantillons de forme d'onde (131, 132) du signal de capteur en réponse à des situations de chute où la lévitation magnétique de l'objet s'arrête, et par conséquent l'objet tombe d'une position en lévitation magnétique sur lesdits un ou plusieurs paliers de sécurité, les situations de chute fournissant une excitation pour le mouvement de l'objet supporté par lesdits un ou plusieurs paliers de sécurité après les situations de chute, et les échantillons de forme d'onde étant indicatifs du mouvement excité par les situations de chute, et
- former un indicateur de condition desdits un ou plusieurs paliers de sécurité sur la base de différences entre les échantillons de forme d'onde enregistrés en réponse à différentes situations de chute.

2. Système de surveillance selon la revendication 1, dans lequel le système de traitement de données est configuré pour :
- calculer une forme d'onde de différence (133), qui est une différence entre des premier et deuxième échantillons de forme d'onde (131, 132) relatifs à différentes situations de chute de sorte que les points de départ des premier et deuxième échantillons de forme d'onde soient alignés l'un sur l'autre, et
- former l'indicateur de condition desdits un ou plusieurs paliers de sécurité sur la base de la forme d'onde de différence calculée.

3. Système de surveillance selon la revendication 2, dans lequel le système de traitement de données est configuré pour régler l'indicateur de condition afin d'exprimer un état d'usure desdits un ou plusieurs paliers de sécurité en réponse à une situation où la forme d'onde de différence calculée (133) est en dehors d'une zone de tolérance prédéterminée (138).

4. Système de surveillance selon la revendication 2 ou 3, dans lequel le système de traitement de données est configuré pour calculer une variable de tendance dans le domaine temporel indicative de l'augmentation de puissance de la forme d'onde de différence quand i) une nouvelle situation de chute se produit, ii) le premier des échantillons de forme d'onde est maintenu inchangé dans le calcul de la forme d'onde de différence, et iii) le deuxième des échantillons de forme d'onde est changé pour devenir l'échantillon de forme d'onde relatif à la nouvelle situation de chute, la variable de tendance dans le domaine temporel étant indicative de l'évolution de l'état desdits un ou plusieurs paliers de sécurité au fil du temps.

5. Système de surveillance selon l'une quelconque des revendications 1 à 4, dans lequel le système de traitement de données est configuré pour :
- calculer les spectres de fréquence (134, 135) des premier et deuxième échantillons de forme d'onde (131, 132) relatifs à différentes situations de chute,
- calculer un spectre de différence (137) comme étant une différence entre les spectres de fréquence calculés, et
- former l'indicateur de condition desdits un ou plusieurs paliers de sécurité sur la base du spectre de différence.

6. Système de surveillance selon la revendication 5, dans lequel le système de traitement de données est configuré pour régler l'indicateur de condition afin d'exprimer un état d'usure desdits un ou plusieurs paliers de sécurité en réponse à une situation où le spectre de différence est en dehors d'une zone de tolérance prédéterminée (139).

7. Système de surveillance selon la revendication 5 ou 6, dans lequel le système de traitement de données est configuré pour calculer une variable de tendance dans le domaine fréquentiel indicative d'une augmentation de puissance du spectre de différence quand i) une nouvelle situation de chute se produit, ii) le premier des échantillons de forme d'onde est maintenu inchangé dans le calcul du spectre de différence, et iii) le deuxième des échantillons de forme d'onde est changé pour devenir l'échantillon de forme d'onde relatif à la nouvelle situation de chute, la variable de tendance dans le domaine fréquentiel étant indicative de l'évolution de l'état desdits un ou plusieurs paliers de sécurité au fil du temps.

8. Système de palier magnétique comprenant :
- au moins un palier magnétique (104-106) configuré pour faire léviter magnétiquement un objet (107),
- un système de capteur (108) configuré pour générer un signal de position indicatif de la position de l'objet par rapport à une position de référence de l'objet,
- un contrôleur (109) configuré pour contrôler le courant électrique de chaque bobine dudit au moins un palier magnétique sur la base du signal de position, et
- un ou plusieurs paliers de sécurité (110) configurés pour supporter l'objet en réponse à des situations de chute où la lévitation magnétique de l'objet s'arrête, et par conséquent l'objet tombe d'une position en lévitation magnétique sur lesdits un ou plusieurs paliers de sécurité,
**caractérisé en ce que** le système de palier magnétique comprend un système de surveillance selon l'une quelconque des revendications 1 à 7 pour surveiller la condition desdits un ou plusieurs paliers de sécurité.

9. Système de palier magnétique selon la revendication 8, dans lequel le système de capteur (108) est configuré pour agir comme l'équipement de capteur (101) du système de surveillance, et le signal de position comprend le signal de capteur utilisé par le système de surveillance.

10. Système de palier magnétique selon la revendication 8 ou 9, dans lequel le contrôleur (109) est configuré pour agir comme système de traitement de données (103) du système de surveillance.

11. Système de palier magnétique selon la revendication 10, dans lequel le contrôleur est configuré pour désactiver le contrôle du courant électrique de chaque bobine dudit au moins un palier magnétique en réponse à chacune des situations de chute afin de libérer la capacité du contrôleur à agir comme système de traitement de données du système de surveillance.

12. Procédé de surveillance de la condition d'un ou plusieurs paliers de sécurité d'un objet en lévitation magnétique, le procédé comprenant :
- la production (201) d'un signal de capteur indicatif du mouvement de l'objet en lévitation magnétique,
**caractérisé en ce que** le procédé comprend :
- l'enregistrement (202), dans une mémoire, d'échantillons de forme d'onde du signal de capteur en réponse à des situations de chute où la lévitation magnétique de l'objet s'arrête, et par conséquent l'objet tombe d'une position en lévitation magnétique sur lesdits un ou plusieurs paliers de sécurité, les situations de chute fournissant une excitation pour le mouvement de l'objet supporté par lesdits un ou plusieurs paliers de sécurité après les situations de chute, et les échantillons de forme d'onde étant indicatifs du mouvement excité par les situations de chute, et
- la formation (203) d'un indicateur de condition desdits un ou plusieurs paliers de sécurité sur la base de différences entre les échantillons de forme d'onde enregistrés en réponse à différentes situations de chute.

13. Programme informatique destiné à surveiller la condition d'un ou plusieurs paliers de sécurité d'un objet en lévitation magnétique, le programme informatique comprenant des instructions exécutables par un ordinateur permettant de contrôler un système de traitement de données programmable pour :
- recevoir un signal de capteur indicatif du mouvement de l'objet en lévitation magnétique,
**caractérisé en ce que** le programme informatique comprend des instructions exécutables par un ordinateur permettant de contrôler le système de traitement de données programmable pour :
- enregistrer dans une mémoire des échantillons de forme d'onde du signal de capteur en réponse à des situations de chute où la lévitation magnétique de l'objet s'arrête, et par conséquent l'objet tombe d'une position en lévitation magnétique sur lesdits un ou plusieurs paliers de sécurité, les situations de chute fournissant une excitation pour le mouvement de l'objet supporté par lesdits un ou plusieurs paliers de sécurité après les situations de chute, et les échantillons de forme d'onde étant indicatifs du mouvement excité par les situations de chute, et
- former un indicateur de condition desdits un ou plusieurs paliers de sécurité sur la base de différences entre les échantillons de forme d'onde enregistrés en réponse à différentes situations de chute.

14. Support non volatil lisible par un ordinateur sur lequel est encodé un programme informatique selon la revendication 13.
